# EUROPÄISCHE PATENTSCHRIFT

(11) **EP 1 421 247 B1**
(45) Veröffentlichungstag und Bekanntmachung des Hinweises auf die Patenterteilung: **04.01.2006**
(21) Anmeldenummer: 02758469.7
(22) Anmeldetag: 16.08.2002
(51) Int. Cl.: E05D 15/06, F16B 5/06

(54) **LAUFSCHIENEN-KLEMMHALTER FÜR DIE BEFESTIGUNG VON LAUFSCHIENEN FÜR SCHIEBETÜRSYSTEME**
RUNNER RAIL CLAMPING HOLDER FOR FIXING RUNNER RAILS FOR SLIDING DOOR SYSTEMS
SUPPORT DE SERRAGE DE GLISSIERE DESTINE A LA FIXATION DE GLISSIERES DE SYSTEMES DE PORTE COULISSANTE

(30) Priorität: 16.08.2001 DE 10139167
(43) Veröffentlichungstag der Anmeldung: 26.05.2004
(73) Patentinhaber: DORMA GmbH + Co. KG, 58256 Ennepetal (DE)
(72) Erfinder: ELMER, Hubert, A-6020 Innsbruck (AT)
(86) Internationale Anmeldenummer: PCT/EP2002/009160
(87) Internationale Veröffentlichungsnummer: WO 2003/016664

(56) Entgegenhaltungen:
- DE-A- 10 035 956

## Beschreibung

Die Anmeldung betrifft einen Gegenstand nach der Hauptanmeldung DE 100 35 956 gemäß Gattungsbegriff des Anspruches 1.

Aus dem Prospekt "Bestell- und Konstruktionshandbuch, DORMA Manet, Das Glasgestaltungssystem, Druckvermerk 6/98" der Anmelderin, Seiten 3/01 bis 3/06, sind Laufschienen-Klemmhalter bekannt. Dabei finden verschiedene Systeme der Laufschienenbefestigung Verwendung. Entweder müssen die Laufschienen mit unerwünschten Bohrungen versehen werden oder die Laufschienen-Klemmhalter sind zumindest zweiteilig unter Zwischenlage einer Kunststoffplatte (siehe beispielsweise Seite 3/06) ausgeführt, so dass sie mit ausreichender Presskraft auf die Laufschiene aufgesetzt werden können. Die vorbeschriebene Kunststoffeinlage ist aufgrund ihres Verschleißverhaltens bei Dauerbelastung unerwünscht. Außerdem führt die mehrteilige Ausführung, insbesondere solcher Laufschienen-Klemmhalter, die vom Rollenwagen des Schiebetürsystemes überlaufen werden, zu einer Verteuerung in der Herstellung der vorgenannten Laufschienen-Klemmhalter und erfordern eine hohe Präszision, insbesondere im Bereich der Laufschienenaufnahme des Laufschienen-Klemmhalters, um eine spielfreie Lagerung der Laufschiene in der Laufschienenaufnahme des Laufschienen-Klemmhalters zu gewährleisten.

Die US PS 4,905,345 beschreibt eine Laufschienenführung für Schiebetüren unter Verwendung eines Laufschienenhalters. Die Laufschiene ist dabei in einem U-förmigen Profil gelagert, welches von einem Winkelflansch des Laufschienenhalters unterfasst wird. In ein zwei Laufschienenabschnitte miteinander verbindendes Kupplungsstück, dessen Mantelfläche bündig mit der Mantelfläche der Laufschienen verläuft, greift eine den Winkelflansch des Laufschienenhalters und den Steg des U-förmigen Profiles durchfassende Feststellschraube ein.

Die Hauptanmeldung verbessert die vorgenannten Vorrichtungen dahingehend, dass der Laufschienen-Klemmhalter einstückig ausgebildet, mit geringem Spiel in der Laufschienenaufnahme geführt ist und dass am Laufschienen-Klemmhalter eine die Laufschiene gegen die Laufschienenaufnahme anstellende Klemmvorrichtung angeordnet ist, welche aus einer den Durchmesser der Laufschienenaufnahme verändernden Laufschienenklemme besteht. Die Laufschienenklemme selbst wird mittels einer in die Laufschienenklemme einfassenden Feststellschraube betätigt, so dass sie unter Erschöpfung des Spieles zwischen Laufschienenaufnahme und Laufschiene die Laufschiene in der Laufschienenaufnahme verspannt. Die Verspannung zwischen dem Laufschienen-Klemmhalter und der Unterkonstruktion - beispielsweise einer Glasscheibe - erfolgt durch eine weitere, eine Anschlussplatte des Laufschienen-Klemmhalters mit einer Gegenplatte der Unterkonstruktion verspannenden Madenschraube.

Aufgabe der Erfindung ist es, in weiterer Ausbildung des Gegenstandes nach der Hauptanmeldung auf das zusätzliche Erfordernis einer die Anschlussplatte des Laufschienen-Klemmhalters mit der Unterkonstruktion verspannende Vorrichtung verzichten zu können.

Die Erfindung löst die gestellte Aufgabe mit der Lehre nach Anspruch 1.

Hiernach sind in der Wandung des Laufschienen-Klemmhalters an der der Unterkonstruktion zugewandten Seite eine oder mehrere Durchbrechungen angeordnet, in die ein weicheres Material oder ein Spreizelement eingebettet ist, welches bei Beaufschlagung den Laufschienen-Klemmhalter sowohl mit der Laufschiene als auch mit der Unterkonstruktion oder Anbauteilen derselben kraftschlüssig verspannt.

Dieses kann z. B. durch eine gummiartige Einlage, die in den Raum des Laufschienen-Klemmhalters und gleichzeitig in den Bereich des Klemmhalters (Unterkonstruktion) hineinragt, erreicht werden. In einer weiteren Ausführung kann ein Spreizelement verwendet werden.

Es ist somit die Betätigung nur eines einzigen Spreizelementes erforderlich, mit der gleichzeitig die Laufschiene im Laufschienen-Klemmhalter und der Laufschienen-Klemmhalter mit der Unterkonstruktion verspannt werden kann.

Weitere Merkmale der Erfindung sind durch die Unteransprüche gekennzeichnet.

Nach der Hauptanmeldung weist der Laufschienen-Klemmhalter an seiner der Unterkonstruktion zugewandten Seite eine einstückig angeformte Anschlussplatte auf; in verbessernder Weiterentwicklung wird vorgeschlagen, dass die Durchbrechung die Wandung des Laufschienen-Klemmhalters und die Anschlussplatte durchfasst, wobei die Durchbrechung als Langloch ausgebildet ist, deren längere Achse koaxial zur Längsachse der Laufschiene verläuft.

Nach einem besonderen Ausgestaltungsmerkmal der Erfindung ermöglicht die Ausbildung der Durchbrechung als Langloch, das vorgenannte Spreizelement in dieses Langloch einzubetten, wobei das Spreizelement z. B. aus zwei mit gegensinnig geneigten Gleitflächen aneinanderliegenden Keilen besteht, derart, dass bei axialer Beaufschlagung wenigstens eines Keiles eine gegensinnige seitliche Verschiebung beider Keile erfolgt, wobei ein Keil den Laufschienen-Klemmhalter mit der Laufschiene und ein Keil den Laufschienen-Klemmhalter mit der Unterkonstruktion oder Anbauteilen derselben verspannt. Bei Beaufschlagung eines der beiden vorgenannten Keile gleiten somit die vorbeschriebenen Gleitflächen aneinander, so dass einer der benachbarten Keile unter kraftschlüssiger Anlage der aneinanderliegenden Gleitflächen der Keile sich gegen die Laufschiene und der andere Keil sich gegen die Unterkonstruktion bewegt.

Die axiale Beaufschlagung eines oder beider Keile erfolgt durch eine die Wandung des Laufschienen-Klemmhalters koaxial zur Längsachse der Laufschiene durchfassende und gegen eine Stirnfläche eines Keiles anstellbare Madenschraube.

Zur Erzielung einer reibungsverstärkenden und möglichst großflächigen Anlage der Keile in der verspannten Position einerseits an der Laufschiene und andererseits an der Unterkonstruktion kennzeichnet sich die Erfindung weiter dadurch, dass die der Laufschienenaufnahme zugewandte Fläche eines Keiles im Wesentlichen bündig mit der Krümmung der Laufschienenaufnahme und die der Unterkonstruktion zugewandte Fläche des anderen Keiles im Wesentlichen bündig mit der der Unterkonstruktion zugewandten Fläche der Anschlussplatte verläuft.

Es ist auch möglich, das Spreizelement einstückig auszubilden. In diesem Falle muss das Spreizelement aus einem Material bestehen, das bei einer Druckbeaufschlagung das Spreizelement auseinanderdrückt.

Im Ergebnis wird mit der Erfindung eine Lösung vorgeschlagen, mittels der der Laufschienen-Klemmhalter durch die Betätigung nur einer einzigen Madenschraube sowohl mit der Laufschiene als auch mit der Unterkonstruktion kraftschlüssig verspannt werden kann.

Die Erfindung wird nachfolgend anhand von zwei Ausführungsbeispielen näher erläutert.

### Es zeigen:

Die Figuren 1 bis 4 ein erstes Ausführungsbeispiel, wobei
- Figur 1:: Eine Ansicht des Laufschienen-Klemmhalters gegen die Anschlussplatte,
- Figur 2:: eine Seitenansicht des Laufschienen-Klemmhalters,
- Figur 3:: eine perspektivische Darstellung des Laufschienen-Klemmhalters und
- Figur 4:: eine perspektivische Darstellung der Keile des Spreizelementes und

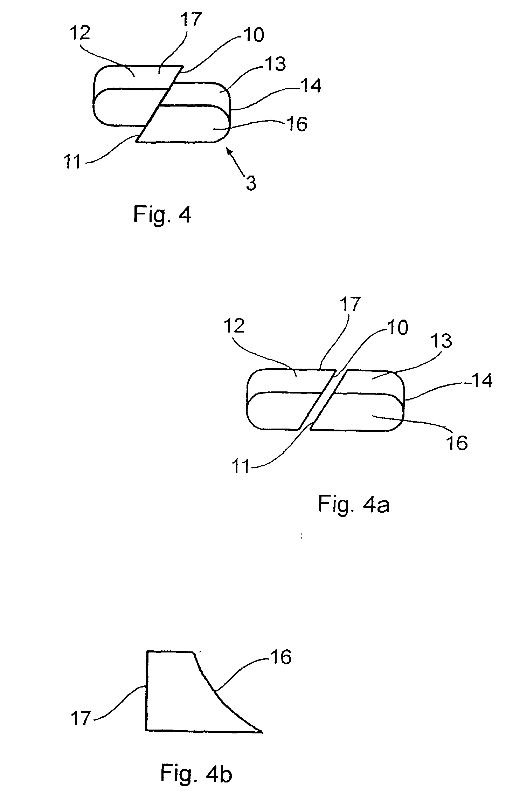

- Figur 4 a:: ein zweiteiliges Spreizelement (Keile auseinandergezogen) und
- Figur 4 b:: ein Spreizelement in der Seitenansicht zeigt.

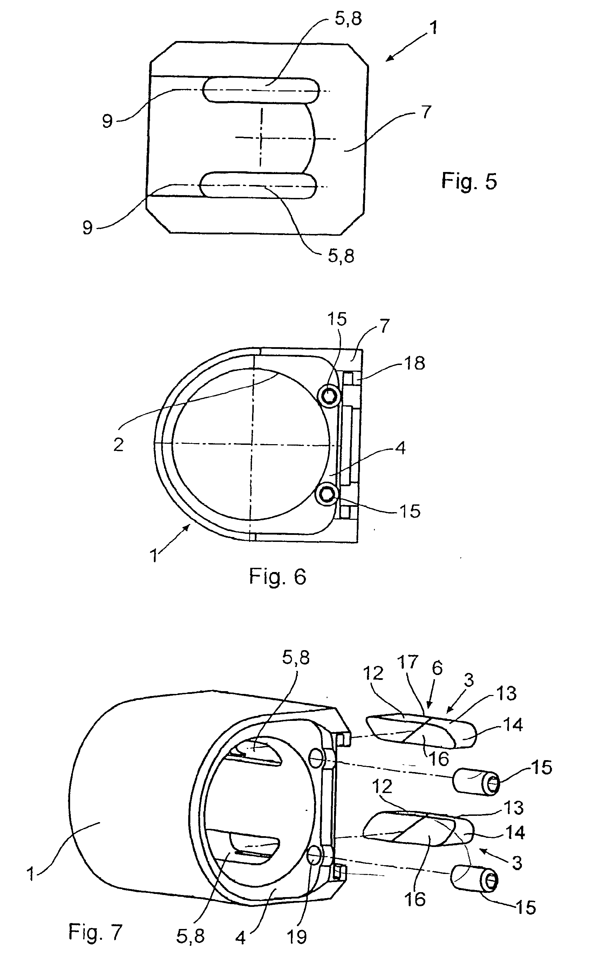

Die Figuren 5 bis 7 ein zweites Ausführungsbeispiel, wobei
- Figur 5:: eine Ansicht des Laufschienen-Klemmhalters gegen die Anschlussplatte,
- Figur 6:: eine Seitenansicht des Laufschienen-Klemmhalters und
- Figur 7:: eine perspektivische Darstellung des Laufschienen-Klemmhalters zeigt.

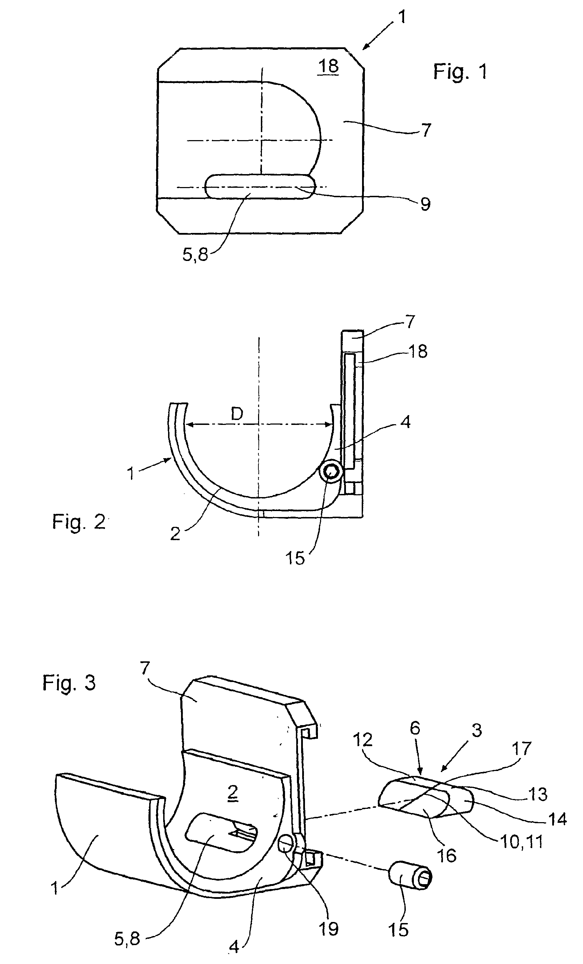

Der Laufschienen-Klemmhalter 1 nach den Figuren 1 bis 4 besitzt eine Laufschienenaufnahme 2, deren Durchmesser mit D bezeichnet wurde. In einer Wandung 4 des Laufschienen-Klemmhalters 1 ist eine Durchbrechung 5 vorgesehen, welche als Langloch 8 ausgebildet ist, dessen Achse 9 koaxial zur Längsachse der nicht dargestellten Laufschiene verläuft. Die in das Langloch 8 einsetzbare Klemmvorrichtung 3 wird durch ein Spreizelement 6 gebildet, welches aus zwei Keilen 12 und 13 besteht. Es ist ersichtlich, dass das Langloch 8 sowohl die Wandung 4 des Laufschienen-Klemmhalters 1 als auch eine einstückig an den Laufschienen-Klemmhalter 1 angeformte Anschlussplatte 7 durchfasst.

Die aneinanderliegenden Flächen der beiden Keile 12 und 13 sind als Gleitflächen 10 und 11 ausgebildet. Die Gleitflächen 10, 11 verlaufen in zwei Richtungen schräg zur Stirnfläche 14. Hierdurch wird bei der richtigen Wahl des Materiales der Keile 12, 13 und der schrägen Gleitflächen 10, 11 bei seitlichem Druck eine Spreizung der Keile 12, 13 bewirkt. Mit 15 ist eine Madenschraube bezeichnet, welche in beiden Ausführungsbeispielen durch eine Bohrung 19 gegen eine Stirnfläche 14 des jeweils in der Bildebene rechten Keiles 13 anstellbar ist. Bei Beaufschlagung der Madenschraube 15 gleiten die Gleitflächen 10 und 11 der Keile 12 und 13 aneinander, so dass sich die in der Figur 4 dargestellte Position ergibt. Dabei legt sich im Ausführungsbeispiel eine zur Laufschiene komplementär ausgebildete Fläche 16 des Keiles 13 (Figur 4 b) gegen eine Mantelfläche der nicht dargestellten Laufschiene und verspannt die Laufschiene mit dem Laufschienen-Klemmhalter 1, während eine Fläche 17 des Keiles 12 sich in entgegengesetzter Richtung bewegt, d. h. aus der Durchbrechung 5 über eine die Anschlussplatte 7 begrenzende Fläche 18 hinaustritt und den Laufschienen-Klemmhalter 1 mit der nicht dargestellten Anschlusskonstruktion verspannt.

Das Ausführungsbeispiel nach den Figuren 5 bis 7 unterscheidet sich von dem Ausführungsbeispiel nach den Figuren 1 bis 4 lediglich dadurch, dass am Laufschienen-Klemmhalter 1 in Übereinanderanordnung jeweils zwei durch die Spreizelemente 6 gebildete Klemmvorrichtungen 3 angeordnet sind.

Die Keile 12, 13 können aus Aluminium, Kunststoff, Gummi oder anderen geeigneten Materialien bestehen.

### Bezugszeichenliste

- 1: Laufschienen-Klemmhalter
- 2: Laufschienenaufnahme
- 3: Klemmvorrichtung
- 4: Wandung
- 5: Durchbrechung
- 6: Spreizelement
- 7: Anschlussplatte
- 8: Langloch
- 9: Achse des Langloches
- 10: Gleitfläche
- 11: Gleitfläche
- 12: Keil
- 13: Keil
- 14: Stirnfläche
- 15: Madenschraube
- 16: Fläche des Keiles
- 17: Fläche des Keiles
- 18: Fläche der Anschlussplatte
- 19: Bohrung
- D: Durchmesser

## Patentansprüche

1. Laufschienen-Klemmhalter (1) für die Befestigung von Laufschienen für Schiebetürsysteme an einer Unterkonstruktion aus Glas, Mauerwerk oder dergleichen, welcher die Laufschiene mit einer einstückigen Laufschienenaufnahme (2) um mehr als den halben Laufschienenumfang kraftschlüssig umgreift, wobei am Laufschienen-Klemmhalter (1) eine die Laufschiene gegen die Laufschienenaufnahme (2) anstellende Klemmvorrichtung (3) angeordnet ist, welche aus einer den Durchmesser (D) der Laufschienenaufnahme (2) verändernden Laufschienenklemme besteht wobei in der Wandung (4) des Laufschienen-Klemmhalters (1) an der der Unterkonstruktion zugewandten Seite eine oder mehrere Durchbrechung(en) (5) angeordnet ist/sind, in die jeweils ein Klemmelement (3) der Klemmvorrichtung eingebettet ist, welches bei Beaufschlagung den Laufschienen-Klemmhalter (1) sowohl mit der Laufschiene als auch mit der Unterkonstruktion oder Anbauteilen derselben kraftschlüssig verspannt.

2. Laufschienen-Klemmhalter nach Anspruch 1, **dadurch gekennzeichnet, dass** das Klemmelement (3) als Spreizelement (6) ausgebildet ist.

3. Laufschienen-Klemmhalter nach Anspruch 1, **dadurch gekennzeichnet, dass** der Laufschienen-Klemmhalter (1) an seiner einer Unterkonstruktion zugewandten Seite eine einstückig angeformte Anschlussplatte (7) aufweist und die Durchbrechung (5) die Wandung (4) des Laufschienen-Klemmhalters (1) und die Anschlussplatte (7) durchfasst.

4. Laufschienen-Klemmhalter nach Anspruch 3, **dadurch gekennzeichnet, dass** die Durchbrechung (5) als Langloch (8) ausgebildet ist, deren längere Achse (9) koaxial zur Längsachse der Laufschiene verläuft.

5. Laufschienen-Klemmhalter nach Anspruch 2, **dadurch gekennzeichnet, dass** das Spreizelement (6) aus zwei mit gegensinnig geneigten Gleitflächen (10, 11) aneinanderliegenden Keilen (12, 13) besteht, derart, dass bei axialer Beaufschlagung wenigstens eines Keiles (12, 13) eine gegensinnige seitliche Verschiebung beider Keile (12, 13) erfolgt, wobei ein Keil (13) den Laufschienen-Klemmhalter (1) mit der Laufschiene und ein Keil (12) den Laufschienen-Klemmhalter (1) mit der Unterkonstruktion oder Anbauteilen derselben verspannt.

6. Laufschienen-Klemmhalter nach Anspruch 5, **dadurch gekennzeichnet, dass** die axiale Beaufschlagung wenigstens eines Keiles (12, 13) durch eine die Wandung (4) des Laufschienen-Klemmhalters (1) koaxial zur Längsachse der Laufschiene durchfassende und gegen eine Stirnfläche (14) eines Keiles (12, 13) anstellbaren Madenschraube (15) erfolgt.

7. Laufschienen-Klemmhalter nach einem der Ansprüche 5 bis 6, **dadurch gekennzeichnet, dass** die der Laufschienenaufnahme (2) zugewandten Fläche (16) des Keiles (13) im Wesentlichen bündig mit der Krümmung der Laufschienenaufnahme (2) und die der Unterkonstruktion zugewandten Fläche (17) des Keiles (12) im Wesentlichen bündig mit der der Unterkonstruktion zugewandten Fläche (18) der Anschlussplatte (7) verläuft.

8. Laufschienen-Klemmhalter nach Anspruch 2, **dadurch gekennzeichnet, dass** das Spreizelement (6) einstückig ausgeführt ist.

9. Laufschienen-Klemmhalter nach Anspruch 8, **dadurch gekennzeichnet, dass** das Spreizelement (6) aus Gummi besteht.

10. Laufschienen-Klemmhalter nach einem der vorhergehenden Ansprüche, **dadurch gekennzeichnet, dass** das Spreizelement (6) bzw. Klemmelement (3) aus Aluminium, Gummi, Kunststoff oder anderen geeigneten Materialien besteht.

## Claims

1. A roller rail clamp mounting (1) for the attachment of roller rails for sliding door systems at a sub-structure made from glass, masonry or the like, which non-positively embraces the roller rail with an integral roller rail reception (2) by more than half of the roller rail circumference, a clamping device (3) being disposed at the roller rail clamp mounting (1), which device adjusts the roller rail against the roller rail reception (2) and consists of a roller rail clamp modifying the diameter (D) of the roller rail reception (2), one or several breakthroughs (5) being disposed in the walling (4) of the roller rail clamp mounting (1) at the side oriented towards the sub-structure, in which breakthrough(s) respectively one clamping component (3) of the clamping device is embedded, which component, once it is charged, non-positively braces the roller rail clamp mounting (1) both with the roller rail and the sub-structure or add-on parts thereof.

2. A roller rail clamp mounting according to claim 1, **characterized in that** the clamping component (3) is formed as a spreading component (6).

3. A roller rail clamp mounting according to claim 1, **characterized in that** the roller rail clamp mounting (1), at the side thereof oriented towards the sub-structure, presents an integrally conformed connector plate (7) and the breakthrough (5) passes through the walling (4) of the roller rail clamp mounting (1) and the connector plate (7).

4. A roller rail clamp mounting according to claim 3, **characterized in that** the breakthrough (5) is formed as an oblong hole (8), the longer axis (9) extending coaxially with regard to the longitudinal axis of the roller rail.

5. A roller rail clamp mounting according to claim 2, **characterized in that** the spreading component (6) consists of two adjacent wedges (12, 13) having sliding surfaces (10, 11) inclined in opposite directions such that, when at least one of the wedges (12, 13) is axially charged, lateral displacement of both wedges (12, 13) in opposite directions is achieved, one wedge (13) interlocking the roller rail clamp mounting (1) with the roller rail and the other wedge (12) interlocking the roller rail clamp mounting (1) to the sub-structure or to the add-on parts thereof.

6. A roller rail clamp mounting according to claim 5, **characterized in that** axially charging of at least one of the wedges (12, 13) is realized by a headless screw (15) adjustable at a frontal face (14) of one wedge (12, 13) and passing through the walling (4) of the roller rail clamp mounting (1) coaxially with regard to the longitudinal axis of the roller rail.

7. A roller rail clamp mounting according to any of the claims 5 to 6, **characterized in that** the surface (16) of the wedge (13), oriented towards the roller rail reception (2), extends substantially flush with the curvature of the roller rail reception (2) and the surface (17) of the wedge (12), oriented towards the sub-structure, extends substantially flush with the surface (18) of the connector plate (7) oriented towards the sub-structure.

8. A roller rail clamp mounting according to claim 2, **characterized in that** the spreading component (6) is integrally formed.

9. A roller rail clamp mounting according to claim 8, **characterized in that** the spreading component (6) is made from rubber.

10. A roller rail clamp mounting according to any of the preceding claims, **characterized in that** the spreading component (6) or the clamping component (3) is made from aluminium, rubber, plastic material or other suitable materials.

## Revendications

1. Support de serrage du rail de roulement (1) pour la fixation de rails de roulement pour des systèmes de portes coulissantes sur une structure porteuse en verre, en maçonnerie ou similaire, qui entoure, par la force le rail de roulement avec une réception du rail de roulement (2) intégrale, de plus de la moitié de la circonférence du rail de roulement, un dispositif de serrage (3), qui ajuste le rail de roulement contre la réception du rail de roulement (2), étant agencé sur le support de serrage du rail de roulement (1), ledit dispositif consistant en une pince de rail de roulement modifiant le diamètre (D) de la réception rail de roulement (2), une lumière ou plusieurs lumières (5) étant agencée(s) dans la paroi (4) du support de serrage du rail de roulement (1) sur le côté orienté vers la structure porteuse, dans laquelle (lesquelles) chaque fois un élément de serrage (3) du dispositif de serrage est encastré, ledit élément pendant son chargement va bloquer par la force le support de serrage du rail de roulement (1) non seulement avec le rail de roulement mais aussi avec la structure porteuse ou d'autres éléments de celle-ci.

2. Support de serrage du rail de roulement selon la revendication 1, **caractérisé en ce que** l'élément de serrage (3) est aménagé comme membre d'écartement (6).

3. Support de serrage du rail de roulement selon la revendication 1, **caractérisé en ce que** le support de serrage du rail de roulement (1) présente, sur sa face orientée vers la structure porteuse, une plaque de connexion (7) conformée intégralement et la lumière (5) passe à travers la paroi (4) du support de serrage du rail de roulement (1) et à travers la plaque de connexion (7).

4. Support de serrage du rail de roulement selon la revendication 3, **caractérisé en ce que** la lumière (5) est aménagée comme trou oblong (8) dont l'axe plus long (9) s'étend coaxialement par rapport à l'axe longitudinal du rail de roulement.

5. Support de serrage du rail de roulement selon la revendication 2, **caractérisé en ce que** le membre d'écartement (6) consiste en deux cales (12, 13) avoisinantes ayant des faces glissantes (10, 11) inclinées en sens opposés de façon à ce que, lorsque il y a chargement axial d'au moins de l'une des cales (12, 13), un déplacement latéral en sens opposé des deux cales (12, 13) est effectué, une cale (13) bloquant alors le support de serrage du rail de roulement (1) avec le rail de roulement et l'autre cale (12) bloquant le support de serrage du rail de roulement (1) avec la structure porteuse ou avec d'autres éléments de celle-ci.

6. Support de serrage du rail de roulement selon la revendication 5, **caractérisé en ce que** le chargement axial d'au moins de l'une des cales (12, 13) s'effectue par l'intermédiaire d'une vis sans tête (15) passant à travers la paroi (4) du support de serrage du rail de roulement (1) coaxialement par rapport à l'axe longitudinal du rail de roulement et ajustable contre une face terminale (14) de l'une des cales (12, 13).

7. Support de serrage du rail de roulement selon l'une des revendications 5 à 6, **caractérisé en ce que** la surface (16) de la cale (13) orientée vers la réception du rail de roulement (2) s'étend essentiellement au ras de la courbure de la réception du rail de roulement (2) et la surface (17) de la cale (12) orientée vers la structure porteuse s'étend essentiellement au ras de la surface (18) de la plaque de connexion (7) orientée vers la structure porteuse.

8. Support de serrage du rail de roulement selon la revendication 2, **caractérisé en ce que** le membre d'écartement (6) est aménagé intégralement.

9. Support de serrage du rail de roulement selon la revendication 8, **caractérisé en ce que** le membre d'écartement (6) est fait en caoutchouc.

10. Support de serrage du rail de roulement selon l'une des revendications précédentes, **caractérisé en ce que** le membre d'écartement (6) ou le membre de serrage (3) sont faits en aluminium, en caoutchouc, en matière plastique ou en d'autres matériaux appropriés.
